(19) **Europäisches Patentamt**
**European Patent Office**
**Office européen des brevets**

(11) **EP 4 228 168 B1**

(12) # EUROPEAN PATENT SPECIFICATION

(45) Date of publication and mention
of the grant of the patent:
**14.05.2025 Bulletin 2025/20**

(51) International Patent Classification (IPC):
**H04B 7/06** (2006.01) **H04L 1/00** (2006.01)
**H04L 5/00** (2006.01)

(21) Application number: **23161312.6**

(22) Date of filing: **15.09.2008**

(52) Cooperative Patent Classification (CPC):
**H04L 5/0023; H04L 1/0041; H04L 1/0067;**
**H04L 5/0044;** H04B 7/0613

(54) **RATE MATCHING TO MAINTAIN CODE BLOCK RESOURCE ELEMENT BOUNDARIES**

RATENANPASSUNG ZUR BEWAHRUNG VON GRENZEN VON
CODEBLOCKRESSOURCENELEMENTEN

ADAPTATION DE DÉBIT POUR MAINTENIR DES LIMITES D'ÉLÉMENT DE RESSOURCE DE BLOC
DE CODE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **14.09.2007 US 972611 P**
**26.09.2007 US 975418 P**
**11.09.2008 US 209100**

(43) Date of publication of application:
**16.08.2023 Bulletin 2023/33**

(62) Document number(s) of the earlier application(s) in
accordance with Art. 76 EPC:
**08831172.5 / 2 191 581**

(73) Proprietor: **Texas Instruments Incorporated**
**Dallas, TX 75265-5474 (US)**

(72) Inventors:
• **VARADARAJAN, Badri, N**
**Dallas 75206 (US)**
• **ONGGOSANUSI, Eko, N.**
**Allen 75013 TX (US)**

(74) Representative: **Zeller, Andreas**
**Texas Instruments Deutschland GmbH**
**EMEA Patent Department**
**Haggertystraße 1**
**85356 Freising (DE)**

(56) References cited:
**WO-A1-2006/034577** **US-A1- 2004 091 061**

• **ANONYMOUS: "3GPP TS 36.212 V8.0.0 (2007-09)
Technical Specification 3rd Generation
Partnership Project; Technical Specification
Group Radio Access Network; Evolved Universal
Terrestrial Radio Access (E-UTRA);Multiplexing
and channel coding (Release 8)", vol. 36.212, no.
v8.0.0, 1 September 2007 (2007-09-01), pages 1 -
30, XP002539820, Retrieved from the Internet
<URL:http://www.quintillion.co.jp/3GPP/Specs/
36212-800.pdf> [retrieved on 20070901]**
• **VAHID TAROKH ET AL: "Space-Time Block
Coding for Wireless Communications:
Performance Results", IEEE JOURNAL ON
SELECTED AREAS IN COMMUNICATIONS, IEEE
SERVICE CENTER, PISCATAWAY, US, vol. 17, no.
3, 1 March 1999 (1999-03-01), XP011054928,
ISSN: 0733-8716**
• **LG ELECTRONICS: "Spatial mapping of code
blocks for 4 TX SU-MIMO", 3GPP DRAFT;
R1-073503, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG1, no. Athens, Greece; 20070815, 15 August
2007 (2007-08-15), XP050107109**

**Description**

This is directed, in general, to a communication system and, more specifically, to transmitters, receivers and methods of operating transmitters and receivers.

BACKGROUND

In a cellular network, such as one employing orthogonal frequency division multiple access (OFDMA), each cell employs a base station that communicates with user equipment, such as a cell phone, a laptop, or a PDA, that is actively located within its cell. Typically, the downlink transmission resources are shared among multiple user equipments, wherein each user equipment is scheduled using time-frequency resources. Further, each scheduled user equipment may receive data using differing modulation and coding schemes as well as transmitted code blocks that typically do not align transmission symbols for each user equipment. Although current transmission schemes provide reliable operation, improvements in the transmission processes would prove beneficial in the art.

3GPP TS 36.212 V8.0.0 (2007-09) Technical Specification 3rd Generation Partnership Project; Technical Specification Group Radio Access Network; Evolved Universal Terrestrial Radio Access (E-UTRA);Multiplexing and channel coding (Release 8) discloses methods to determine the number of bits per code block.

SUMMARY

The invention is defined by the features of the appended claims.

BRIEF DESCRIPTION OF THE DRAWINGS

Example embodiments are described below with reference to accompanying drawings, wherein:

FIG. 1 illustrates a diagram of a transmitter constructed according to the principles of the present disclosure;
FIG. 2 illustrates a diagram of a receiver constructed according to principles of the present disclosure;
FIG. 3 illustrates a flow diagram of a method of operating a transmitter carried out according to the principles of the present disclosure.
FIG. 4 illustrates a flow diagram of another method of operating a transmitter carried out according to the principles of the present disclosure;
FIG. 5 illustrates a flow diagram of a method of operating a receiver carried out according to the principles of the present disclosure; and
FIG. 6 illustrates a flow diagram of another method of operating a receiver 600 carried out according to the principles of the present disclosure.

DETAILED DESCRIPTION OF EXAMPLE EMBODIMENTS

Many packet-based communication systems perform rate-matching at a transmitter. That is, they ensure that an arbitrary number of input bits is processed to fit into a given number of transmit resources. Currently, in a 3GPP LTE system for example, rate-matching may proceed as follows.

First, the input bits are segmented into one or more code blocks. Typically, this segmentation is done in such a way that no code block exceeds a certain predetermined maximum size. Second, bits on each code block are encoded and interleaved to obtain code block output bits. The third step is rate-matching, where some output bits are selected from each of these code blocks so that the total number of output bits equals the available number of bits that can be transmitted. Typically, this number is determined by a number of resource elements (such as tones or equivalent data-carrying units per unit time) multiplied by the data carrying capacity of each resource element, which is discussed below.

The serial stream of output bits is then mapped into QAM symbols, with $Q_m$ bits required to obtain each QAM symbol. The modulated symbols are split into $N_L$ layers by a serial-to-parallel converter. Each vector of $N_L$ modulated symbols is mixed with modulated symbols from other transport blocks (if any), and mapped onto a resource element (such as a tone). Thus, the data-carrying capacity of each resource element, mentioned above equals $Q_m * L$. If the number of tones is T, the total number of output bits generated by the rate-matching unit becomes $G = T * L * Q_m$. To give numerical examples, the QAM dimension $Q_m$ used in 3GPP LTE is two, four or six, and the number of layers L equals one, two or four. This disclosure focuses on the rate-matching operation and specifically the relation between coded bits from different code blocks and the corresponding resource elements onto which they are mapped. In the prior art, currently, the number of bits from each code block may be obtained as follows.

$$\text{Set } G' = \frac{G}{Q_m}$$

$$\text{Set } \gamma = G' \bmod C, \text{ where } C \text{ is the number of code blocks.}$$

$$\text{For } r = 0, 1, ..., C-1$$

$$\text{if } r \leq C - \square - 1 \text{ set } E_r = Q_m * \left\lfloor \frac{G'}{C} \right\rfloor$$

$$\text{else set } E_r = Q_m * \left\lceil \frac{G'}{C} \right\rceil$$

$$\text{end if}$$

$$\text{end}$$

The above relationship ensures that each code block produces an integer number of modulated symbols. However, it does not ensure that each code block produces bits for an integer number of tones, because $E_r$ may not be divisible by the product $Q_m * L$, which is the number of bits per tone. In such cases, there are some resource elements which contain coded bits from more than one code block.

Specifically, consider an example where $T = 98$, $L = 2$ and $C = 3$. (or any case where $C$ does not divide $T$ for $L > 1$). Note that the number of modulated symbols produced in this example by the three code blocks will be $\{65, 65, 66\}$. For the first two code blocks, the number of modulated symbols is not divisible by the number of symbols per tone. Thus, there will be one tone which has one modulated symbol from the first code block and the other modulated symbol from the second code block.

It is beneficial to ensure that rate-matching preserves resource element boundaries. That is, all of the bits needed to construct the transmit signal for a given resource element come from only one of the code blocks. One reason to require this condition is that some receivers employ a successive interference cancellation (SIC) decoder. These decoders reconstruct the transmit signal from a forward error correcting (FEC) decoder output, which is available on a code block basis. This output is used for cancellation of interference associated with other spatial transmission streams.

Therefore, if a resource element requires bits from different code blocks, the transmit signal on that resource element cannot be constructed until all code blocks have been decoded, which unnecessarily increases the latency of SIC decoding, for example. Embodiments of the present disclosure ensure that code block boundaries are aligned with resource element boundaries.

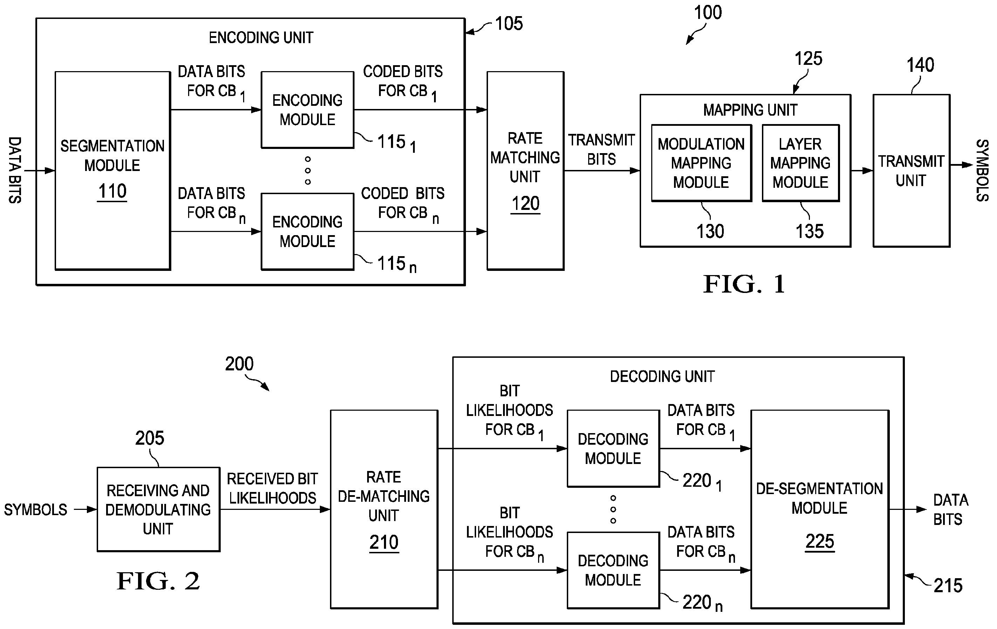

FIG. 1 illustrates a diagram of a transmitter 100 constructed according to the principles of the present disclosure. The transmitter 100 may correspond to a base station transmitter in a cellular network, wherein the cellular network may be part of an OFDMA communication system. The transmitter 100 is for use with multiple transmit antennas and includes an encoding unit 105, a rate matching unit 120, a mapping unit 125 and a transmit unit 140. The encoding unit 105 includes a segmentation module 110 and a collection of encoding modules $115_1$-115n. The mapping unit 125 includes a modulation mapping module 130 and a layer mapping module 135.

The encoding unit 105 encodes input data bits into one or more code blocks. In the illustrated embodiment, the segmentation module 110 accepts a stream of input data bits and segments them into a collection of code blocks $CB_1$-CBn. Each of the collection of encoding modules $115_1$-115n encodes the input data bits in its respective code block to provide encoded bits in the collection of code blocks $CB_1$-CBn, which serve as inputs to the rate matching unit 120.

The rate matching unit 120 generates a stream of transmit bits from the collection of code blocks $CB_1$-CBn. In one embodiment, a group of transmit bits allocated to one resource element originates from only one of the collection of code blocks $CB_1$-CBn. In another embodiment, each code block contributes a number of transmit bits equal to a multiple of a product of a layer matching factor and a number of bits per symbol. The mapping unit 125 employs the modulation mapping module 130 to provide modulated symbols from the stream of transmit bits on a number of spatial transmission layers for one or more resource elements employing the layer mapping module 135. The transmit unit 140 transmits the modulated symbols employing the multiple transmit antennas. In other embodiments of this disclosure, the transmit unit 140 may also combine modulated symbols from other transport blocks.

FIG. 2 illustrates a diagram of a receiver 200 constructed according to principles of the present disclosure. The receiver 200 corresponds to user equipment operating in a cellular network such as an OFDMA communication system. The receiver 100 includes a receiving and demodulating unit 205, a rate de-matching unit 210 and a decoding unit 215. The decoding unit 215 includes a collection of decoding modules $220_1$-220n and a de-segmentation module 225.

The receiving and demodulation unit 205 receives and demodulates modulated symbols on one or more resource elements into a stream of received bit likelihoods corresponding to a number of spatial transmission layers on each resource element. The rate de-matching unit 210 generates one or more code blocks $CB_1$-CBn of bit likelihoods from the stream of received bit likelihoods. In one embodiment, a group of the received bit likelihoods originating from one resource element is allocated to only one of the one or more code blocks $CB_1$-CBn. In another embodiment, each code block is allocated a number of bit likelihoods equal to a multiple of a product of a layer matching factor and a number of bits per modulated symbol.

The decoding unit 215 employs the collection of decoding modules $220_1$-220n to decode the one or more code blocks $CB_1$-CBn from encoded bits into data bits. The de-segmentation module 225 de-segments the resulting data bits of the one or more code blocks $CB_1$-CBn and combines them into a stream of data bits.

The embodiments of FIGS. 1 and 2 provide rate matching and rate de-matching that ensure code block boundaries are aligned with resource element boundaries, as illustrated below.

$$\text{Set } G' = G/(N_L \cdot Q_m)$$

$$\text{Set } \gamma = G' \bmod C \text{, where } C \text{ is the number of code blocks.}$$

$$\text{For } r = 0, 1, ..., C-1$$

$$\text{if } r \leq C - \gamma - 1$$

$$\text{set } E = N_L \cdot Q_m \cdot \lfloor G'/C \rfloor$$

$$\text{else}$$

$$\text{set } E = N_L \cdot Q_m \cdot \lceil G'/C \rceil$$

$$\text{end if}$$

$$\text{end}$$

It may be seen that the number of output bits per code block is guaranteed to be a multiple of the product $N_L * Q_m$. In one embodiment, the value of $N_L$ equals the number of layers L. Thus, in the numerical example considered above (T = 98, $N_L$ = L = 2 and C = 3), it is easy to see that the above procedure yields {64, 66, 66} as the number of modulated symbols produced from each code block.

Other variations of this theme are also possible. For example, the layer matching factor $N_L$ above may be different from the employed number of spatial transmission layers. For instance, it may be any multiple of the number of transmission layers. One exemplary method is to set the layer matching factor $N_L$ equal to the number of transmit antennas, since this is the maximum number of transmission layers. Another example is to set the layer matching factor $N_L$ to be some number which is always divisible by the number of spatial transmission layers. For example, a layer matching factor $N_L$ equal to four may be used even if there is only one or two transmit antennas.

Another variation is to ensure that each equalizer block contains information from the same code block. This becomes important when space-time or space-frequency coding is used across multiple modulated symbol vectors. In this case, the number of layers equals the number of transmit antennas. However, any given resource element only contains two modulated symbols. Thus, in this case, it is sufficient to choose $N_L$ = 2 even though the number of layers is L = 4.

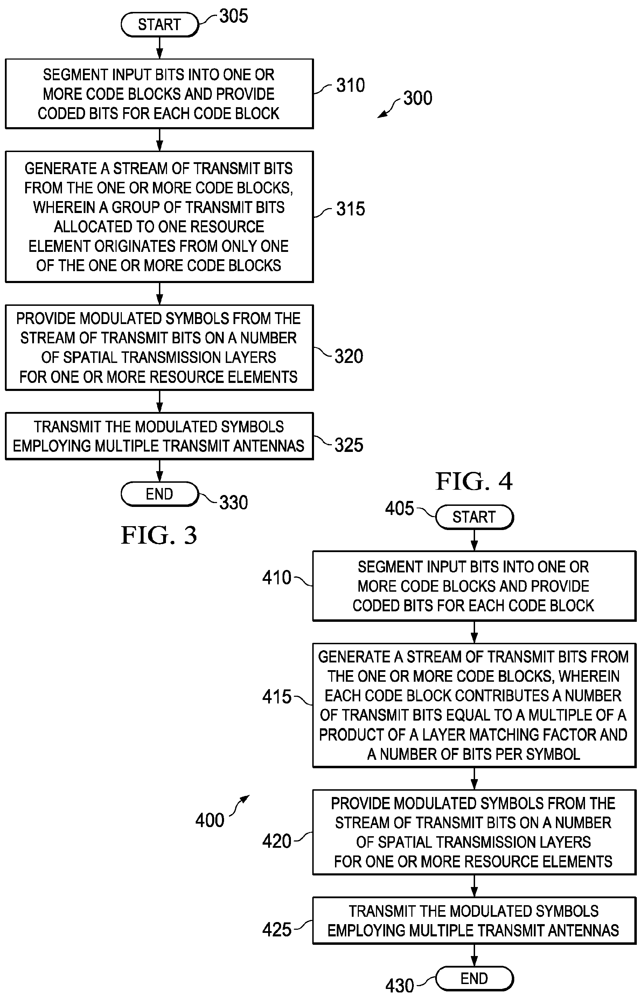

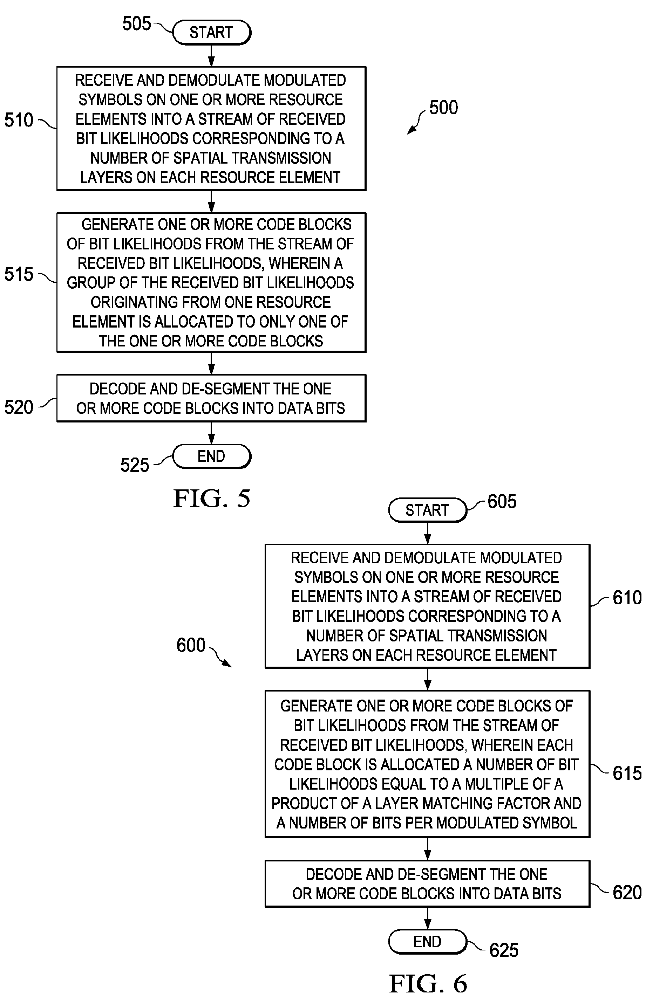

In summary, one set of embodiments of the rate matching and rate de-matching schemes presented ensure that each resource element (such as a tone) only contains bits from the same code block. This employs use of the number of modulated symbols carried on each resource element for a given transport block. In particular, in the spatial multiplexing mode of 3GPP LTE, the number of modulated symbols is equal to the number of spatial transmission layers per transport block, which may be one or two. These embodiments are further discussed with respect to FIGS. 3 and 5.

Another set of embodiments of the rate matching and rate de-matching schemes presented ensure that the number of transmit bits from each code block is a multiple of a basic quantum, which is given by a product of a layer-matching factor and the number of bits per modulated symbol. The layer matching factor may equal to, or be less than, the number of transmission layers. For example, in the transmit diversity mode of 3GPP LTE, the layer matching factor is two, for both two and four spatial transmission layers. These embodiments are further discussed with respect to FIGS. 4 and 6.

FIG. 3 illustrates a flow diagram of a method of operating a transmitter 300 carried out according to the principles of the present disclosure. The method 300 may be employed by a base station transmitter having multiple transmit antennas, such as the one described with respect to FIG. 1, and starts in a step 305. Then, in a step 310, input bits are segmented into one or more code blocks and coded bits are provided for each code block. A stream of transmit bits is generated from the one or more code blocks, wherein a group of transmit bits allocated to one resource element originates from only one of the one or more code blocks, in a step 315.

In one embodiment, the group of transmit bits allocated to the one resource element consists of contiguous bits in the stream of transmit bits. Additionally, the group of transmit bits allocated to the one resource element corresponds to two, four or six bits for each modulated symbol.

Modulated symbols are provided from the group of transmit bits allocated to the one resource element on a number of spatial transmission layers for one or more resource elements, in a step 320. The modulated symbols are transmitted employing the multiple transmit antennas in a step 325, and the method 300 ends in a step 330.

FIG. 4 illustrates a flow diagram of another method of operating a transmitter 400 carried out according to the principles of the present disclosure. The method 400 may also be employed by a base station transmitter having multiple transmit antennas, such as the one described with respect to FIG. 1, and starts in a step 405.

Then, in a step 410, input bits are segmented into one or more code blocks and coded bits are provided for each code block. A stream of transmit bits is generated from the one or more code blocks, wherein each code block contributes a number of transmit bits equal to a multiple of a product of a layer matching factor and a number of bits per symbol, in a step 415.

In one embodiment, the layer matching factor may be equal to the number of spatial transmission layers. Alternatively, the layer matching factor may be a multiple of the number of spatial transmission layers. Additionally, the layer matching factor may be equal to two while the number of spatial transmission layers equals four.

Modulated symbols are provided from the stream of transmit bits on a number of spatial transmission layers for one or more resource elements, in a step 420. The modulated symbols are transmitted employing the multiple transmit antennas in a step 425, and the method 400 ends in a step 430.

FIG. 5 illustrates a flow diagram of a method of operating a receiver 500 carried out according to the principles of the present disclosure. The method 500 may be employed by a user equipment receiver, such as the one described with respect to FIG. 2, and starts in a step 505. Then, in a step 510, modulated symbols on one or more resource elements are received and demodulated into a stream of received bit likelihoods corresponding to a number of spatial transmission layers on each resource element.

One or more code blocks of bit likelihoods is generated from the stream of received bit likelihoods in a step 515, wherein a group of the received bit likelihoods originating from one resource element is allocated to only one of the one or more code blocks. The group of received bit likelihoods originating from the one resource element consists of contiguous bit likelihoods in the stream of received bit likelihoods. Additionally, the group of received bit likelihoods originating from the one resource element corresponds to two, four or six bits for each modulated symbol. The one or more code blocks are decoded and de-segmented into data bits in a step 520, and the method 500 ends in a step 525.

FIG. 6 illustrates a flow diagram of another method of operating a receiver 600 carried out according to the principles of the present disclosure. The method 600 may also be employed by a user equipment receiver, such as the one described with respect to FIG. 2, and starts in a step 605. Then, in a step 610, modulated symbols on one or more resource elements are received and demodulated into a stream of received bit likelihoods corresponding to a number of spatial transmission layers on each resource element.

One or more code blocks of bit likelihoods is generated from the stream of received bit likelihoods in a step 615, wherein each code block is allocated a number of bit likelihoods equal to a multiple of a product of a layer matching factor and a number of bits per modulated symbol.

The layer matching factor may be equal to the number of spatial transmission layers. Alternately, the layer matching factor may be a multiple of the number of spatial transmission layers. Additionally, the layer matching factor may equal two while the number of spatial transmission layers equals four. The one or more code blocks are decoded and de-segmented into data bits in a step 620, and the method 600 ends in a step 625.

While the methods disclosed herein have been described and shown with reference to particular steps performed in a particular order, it will be understood that these steps may be combined, subdivided, or reordered to form an equivalent method without departing from the teachings of the present disclosure. Accordingly, unless specifically indicated herein, the order or the grouping of the steps is not a limitation of the present disclosure.

Embodiments having different combinations of one or more of the features or steps described in the context of example embodiments having all or just some of such features or steps are intended to be covered hereby. Those skilled in the art will appreciate that many other embodiments and variations are also possible within the scope of the claimed invention.

**Claims**

1. A method comprising:

   setting $G' = G/(N_L \cdot Q_m)$, where $G$ is a total number of bits, $N_L$ is a factor determined based on a number of spatial transmission layers, and $Q_m$ is a QAM dimension;
   setting $\gamma = G'\bmod C$, where $C$ is a number of code blocks;
   for each code block r, setting $E = N_L \cdot Q_m \cdot \left\lfloor G'/C \right\rfloor$ if $r$ is less than or equal to $C - \gamma - 1$, otherwise setting $E = N_L \cdot Q_m \cdot \left\lceil G'/C \right\rceil$, where E is a number of bits per code block $r$, and where $r = 0,1,...,C - 1$; and
   performing rate matching or rate de-matching based on $E$.

2. The method of claim 1, wherein $N_L$ is equal to the number of spatial transmission layers.

3. The method of claim 1, wherein $N_L = 2$.

4. The method of claim 1, wherein $N_L = 2$ for the case of 4 spatial transmission layers.

5. The method of any of claims 1-4, wherein performing rate matching or rate de-matching includes performing rate de-matching based on $E$.

6. The method of any of claims 1-5, wherein performing rate matching or rate de-matching includes performing rate matching based on $E$.

7. A device comprising:

   means for setting $G' = G/(N_L \cdot Q_m)$, where $G$ is a total number of bits, $N_L$ is a factor determined based on a number of spatial transmission layers, and $Q_m$ is a QAM dimension;
   means for setting $\gamma = G'\bmod C$, where $C$ is a number of code blocks;
   means for setting, for each code block $r, E = N_L \cdot Q_m \cdot \left\lfloor G'/C \right\rfloor$ if $r$ is less than or equal to $C - \gamma - 1$, otherwise setting $E = N_L \cdot Q_m \cdot \left\lceil G'/C \right\rceil$, where $E$ is a number of bits per code block $r$, and where $r = 0,1,...,C - 1$; and
   means for performing rate matching or rate de-matching based on $E$.

8. The device of claim 7, wherein $N_L$ is equal to the number of spatial transmission layers.

9. The device of claim 7, wherein $N_L = 2$.

10. The device of claim 7, wherein $N_L = 2$ for the case of 4 spatial transmission layers.

11. The device of any of claims 7-10, wherein the means for performing rate matching or rate de-matching includes means for performing rate de-matching based on $E$.

12. The device of any of claims 7-10,

    wherein the means for performing rate matching or rate de-matching includes means for performing rate matching based on $E$.

13. The device of any of claims 7-10,
    wherein the device is a user equipment and the means for performing rate matching or rate de-matching based on $E$ is a means for performing rate de-matching.

14. The device of any of claims 7-10,
    wherein the device is a base station and the means for performing rate matching or rate de-matching based on $E$ is a means for performing rate matching.

**Patentansprüche**

1. Verfahren, das Folgendes umfasst:

   Einstellen von $G' = G/(N_L \cdot Q_m)$, wobei G eine Gesamtzahl von Bits ist, $N_L$ ein Faktor ist, der basierend auf einer Anzahl von räumlichen Übertragungsschichten bestimmt wird, und $Q_m$ eine QAM-Dimension ist;
   Einstellen von $\gamma$ = G'modC, wobei $C$ eine Anzahl von Codeblöcken ist;

   für jeden Codeblock $r$, Einstellen von $E = N_L \cdot Q_m \cdot \lfloor G' / C \rfloor$, wenn $r$ kleiner oder gleich C - $\gamma$ -1

   ist, andernfalls Einstellen von $E = N_L \cdot Q_m \cdot \lceil G' / C \rceil$, wobei $E$ eine Anzahl von Bits pro Codeblock $r$ ist, und wobei $r$ = 0,1, ... , C - 1; und
   Durchführen einer Ratenanpassung bzw. Ratenaufhebung auf der Basis von E.

2. Verfahren nach Anspruch 1, wobei $N_L$ gleich der Anzahl von räumlichen Übertragungsschichten ist.

3. Verfahren nach Anspruch 1, wobei $N_L$ = 2 ist.

4. Verfahren nach Anspruch 1, wobei $N_L$ = 2 für den Fall von 4 räumlichen Übertragungsschichten ist.

5. Verfahren nach einem der Ansprüche 1-4, wobei das Durchführen von Ratenanpassung oder Ratenaufhebung das Durchführen von Ratenaufhebung basierend auf E beinhaltet.

6. Verfahren nach einem der Ansprüche 1-5, wobei das Durchführen von Ratenanpassung oder Ratenaufhebung das Durchführen von Ratenanpassung basierend auf E beinhaltet.

7. Vorrichtung, die Folgendes umfasst:

   Mittel zum Einstellen von $G' = G/(N_L \cdot Q_m)$, wobei G eine Gesamtzahl von Bits ist, $N_L$ ein Faktor ist, der basierend auf einer Anzahl von räumlichen Übertragungsschichten bestimmt wird, und $Q_m$ eine QAM-Dimension ist;
   Mittel zum Einstellen von $\gamma$ = G'modC, wobei $C$ eine Anzahl von Codeblöcken ist;

   Mittel zum Einstellen, für jeden Codeblock $r$, von $E = N_L \cdot Q_m \cdot \lfloor G' / C \rfloor$, wenn $r$ kleiner oder gleich C - $\gamma$ - 1 ist,

   andernfalls Einstellen von $E = N_L \cdot Q_m \cdot \lceil G' / C \rceil$, wobei $E$ eine Anzahl von Bits pro Codeblock $r$ ist, und wobei $r$ = 0,1,...,$C$ - 1 ist; und
   Mittel zum Durchführen von Ratenanpassung oder Ratenaufhebung basierend auf E.

8. Vorrichtung nach Anspruch 7, wobei $N_L$ gleich der Anzahl von räumlichen Übertragungsschichten ist.

9. Vorrichtung nach Anspruch 7, wobei $N_L$ = 2 ist.

10. Vorrichtung nach Anspruch 7, wobei $N_L$ = 2 für den Fall von 4 räumlichen Übertragungsschichten ist.

11. Vorrichtung nach einem der Ansprüche 7-10, wobei das Mittel zum Durchführen von Ratenanpassung oder Ratenaufhebung Mittel zum Durchführen von Ratenaufhebung basierend auf $E$ beinhaltet.

12. Vorrichtung nach einem der Ansprüche 7-10, wobei das Mittel zum Durchführen von Ratenanpassung oder Ratenaufhebung Mittel zum Durchführen von Ratenanpassung basierend auf E beinhaltet.

13. Vorrichtung nach einem der Ansprüche 7-10, wobei die Vorrichtung ein Benutzergerät ist und das Mittel zum Durchführen von Ratenanpassung oder Ratenaufhebung basierend auf E ein Mittel zum Durchführen von Ratenaufhebung ist.

14. Vorrichtung nach einem der Ansprüche 7-10, wobei die Vorrichtung eine Basisstation ist und das Mittel zum Durchführen von Ratenanpassung oder Ratenaufhebung basierend auf E ein Mittel zum Durchführen von Ratenanpassung ist.

**Revendications**

1. Procédé, comprenant :

   le réglage de $G' = G/(N_L \cdot Q_m)$, où $G$ est un nombre total de bits, $N_L$ est un facteur déterminé sur la base d'un nombre de couches de transmission spatiale, et $Q_m$ est une dimension QAM ;
   le réglage de $\gamma = G' \bmod C$, où $C$ est un nombre de blocs de code ;
   pour chaque bloc de code $r$, le réglage de $E = N_L \cdot Q_m \cdot \lfloor G' / C \rfloor$ si $r$ est inférieur ou égal à $C - \gamma - 1$, autrement le réglage de $E = N_L \cdot Q_m \cdot \lceil G' / C \rceil$, où $E$ est un nombre de bits par bloc de code $r$, et où $r = 0,1,...,C - 1$ ; et
   la réalisation d'une adaptation de débit ou d'une désadaptation de débit sur la base de $E$.

2. Procédé de la revendication 1, dans lequel $N_L$ est égal au nombre de couches de transmission spatiale.

3. Procédé de la revendication 1, dans lequel $N_L = 2$.

4. Procédé de la revendication 1, dans lequel $N_L = 2$ pour le cas de 4 couches de transmission spatiale.

5. Procédé de quelconques des revendications 1 à 4, dans lequel la réalisation d'une adaptation de débit ou d'une désadaptation de débit inclut la réalisation d'une désadaptation de débit sur la base de $E$.

6. Procédé de quelconques des revendications 1 à 5, dans lequel la réalisation d'une adaptation de débit ou d'une désadaptation de débit inclut la réalisation d'une adaptation de débit sur la base de E.

7. Dispositif, comprenant :

   des moyens destinés à régler $G' = G/(N_L \cdot Q_m)$, où $G$ est un nombre total de bits, $N_L$ est un facteur déterminé sur la base d'un nombre de couches de transmission spatiale, et $Q_m$ est une dimension QAM ;
   des moyens destinés à régler $\gamma = G' \bmod C$, où $C$ est un nombre de blocs de code ;
   des moyens destinés à régler, pour chaque bloc de code $r$, $E = N_L \cdot Q_m \cdot \lfloor G' / C \rfloor$ si $r$ est inférieur ou égal à $C - \gamma - 1$, autrement le réglage de $E = N_L \cdot Q_m \cdot \lceil G' / C \rceil$, où $E$ est un nombre de bits par bloc de code $r$, et où $r = 0, 1, ... , C - 1$ ; et
   des moyens destinés réaliser une adaptation de débit ou une désadaptation de débit sur la base de $E$.

8. Dispositif de la revendication 7, dans lequel $N_L$ est égal au nombre de couches de transmission spatiale.

9. Dispositif de la revendication 7, dans lequel $N_L = 2$.

10. Dispositif de la revendication 7, dans lequel $N_L = 2$ pour le cas de 4 couches de transmission spatiale.

11. Dispositif de quelconques des revendications 7 à 10, dans lequel les moyens destinés réaliser une adaptation de débit ou une désadaptation de débit incluent des moyens destinés réaliser une désadaptation de débit sur la base de $E$.

12. Dispositif de quelconques des revendications 7 à 10, dans lequel les moyens destinés réaliser une adaptation de débit ou une désadaptation de débit incluent des moyens destinés réaliser une adaptation de débit sur la base de $E$.

13. Dispositif de quelconques des revendications 7 à 10, dans lequel le dispositif est un équipement utilisateur et les moyens destinés réaliser une adaptation de débit ou une désadaptation de débit sur la base de $E$ sont des moyens destinés réaliser une désadaptation de débit.

14. Dispositif de quelconques des revendications 7 à 10, dans lequel le dispositif est une station de base et les moyens destinés réaliser une adaptation de débit ou une désadaptation de débit sur la base de $E$ sont des moyens destinés réaliser une adaptation de débit.

FIG. 1

FIG. 2

START ⌐305

SEGMENT INPUT BITS INTO ONE OR
MORE CODE BLOCKS AND PROVIDE
CODED BITS FOR EACH CODE BLOCK ⌐310

300

GENERATE A STREAM OF TRANSMIT BITS
FROM THE ONE OR MORE CODE BLOCKS,
WHEREIN A GROUP OF TRANSMIT BITS
ALLOCATED TO ONE RESOURCE
ELEMENT ORIGINATES FROM ONLY ONE
OF THE ONE OR MORE CODE BLOCKS ⌐315

PROVIDE MODULATED SYMBOLS FROM THE
STREAM OF TRANSMIT BITS ON A NUMBER
OF SPATIAL TRANSMISSION LAYERS
FOR ONE OR MORE RESOURCE ELEMENTS ⌐320

TRANSMIT THE MODULATED SYMBOLS
EMPLOYING MULTIPLE TRANSMIT ANTENNAS ⌐325

END ⌐330

FIG. 3

FIG. 4

405 ⌐ START

SEGMENT INPUT BITS INTO ONE OR
MORE CODE BLOCKS AND PROVIDE
CODED BITS FOR EACH CODE BLOCK ⌐410

GENERATE A STREAM OF TRANSMIT BITS FROM
THE ONE OR MORE CODE BLOCKS, WHEREIN
EACH CODE BLOCK CONTRIBUTES A NUMBER
OF TRANSMIT BITS EQUAL TO A MULTIPLE OF A
PRODUCT OF A LAYER MATCHING FACTOR AND
A NUMBER OF BITS PER SYMBOL ⌐415

400

PROVIDE MODULATED SYMBOLS FROM THE
STREAM OF TRANSMIT BITS ON A NUMBER
OF SPATIAL TRANSMISSION LAYERS
FOR ONE OR MORE RESOURCE ELEMENTS ⌐420

TRANSMIT THE MODULATED SYMBOLS
EMPLOYING MULTIPLE TRANSMIT ANTENNAS ⌐425

END ⌐430

505 START

510
RECEIVE AND DEMODULATE MODULATED SYMBOLS ON ONE OR MORE RESOURCE ELEMENTS INTO A STREAM OF RECEIVED BIT LIKELIHOODS CORRESPONDING TO A NUMBER OF SPATIAL TRANSMISSION LAYERS ON EACH RESOURCE ELEMENT

500

515
GENERATE ONE OR MORE CODE BLOCKS OF BIT LIKELIHOODS FROM THE STREAM OF RECEIVED BIT LIKELIHOODS, WHEREIN A GROUP OF THE RECEIVED BIT LIKELIHOODS ORIGINATING FROM ONE RESOURCE ELEMENT IS ALLOCATED TO ONLY ONE OF THE ONE OR MORE CODE BLOCKS

520
DECODE AND DE-SEGMENT THE ONE OR MORE CODE BLOCKS INTO DATA BITS

525 END

FIG. 5

605 START

610
RECEIVE AND DEMODULATE MODULATED SYMBOLS ON ONE OR MORE RESOURCE ELEMENTS INTO A STREAM OF RECEIVED BIT LIKELIHOODS CORRESPONDING TO A NUMBER OF SPATIAL TRANSMISSION LAYERS ON EACH RESOURCE ELEMENT

600

615
GENERATE ONE OR MORE CODE BLOCKS OF BIT LIKELIHOODS FROM THE STREAM OF RECEIVED BIT LIKELIHOODS, WHEREIN EACH CODE BLOCK IS ALLOCATED A NUMBER OF BIT LIKELIHOODS EQUAL TO A MULTIPLE OF A PRODUCT OF A LAYER MATCHING FACTOR AND A NUMBER OF BITS PER MODULATED SYMBOL

620
DECODE AND DE-SEGMENT THE ONE OR MORE CODE BLOCKS INTO DATA BITS

625 END

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Technical Specification 3rd Generation Partnership Project; Technical Specification Group Radio Access Network; Evolved Universal Terrestrial Radio Access (E-UTRA);Multiplexing and channel coding (Release 8). *3GPP TS 36.212 V8.0.0*, September 2007